# FASCICULE DE BREVET EUROPEEN

(11) **EP 1 464 058 B1**
(45) Date de publication et mention de la délivrance du brevet: **06.01.2010**
(21) Numéro de dépôt: 02795392.6
(22) Date de dépôt: 25.11.2002
(51) Int. Cl.: G21C 1/00

(54) **REACTEUR NUCLEAIRE COMPACT A EAU SOUS PRESSION**
KOMPAKATER DRUCKWASSERKERNREAKTOR
COMPACT PRESSURIZED WATER NUCLEAR REACTOR

(30) Priorité: 26.11.2001 FR 0115266
(43) Date de publication de la demande: 06.10.2004
(73) Titulaire: COMMISSARIAT A L'ENERGIE ATOMIQUE, 75015 Paris (FR)
(72) Inventeur: GAUTIER, Guy-Marie, F-84120 Pertuis (FR); PIGNATEL, Jean-François, F-13490 Jouques (FR)
(74) Mandataire: Poulin, Gérard
(86) Numéro de dépôt international: PCT/FR2002/004030
(87) Numéro de publication internationale: WO 2003/046927

(56) Documents cités:
- FR-A- 1 526 787
- US-A- 4 072 563
- US-A- 5 045 274

## Description

### Domaine technique

L'invention concerne un réacteur nucléaire à eau sous pression de conception intégrée et compacte.

L'invention s'applique en particulier aux réacteurs nucléaires de petite et moyenne puissances, c'est-à-dire notamment aux réacteurs dont la puissance est inférieure ou égale à environ 600 MWe.

### Etat de la technique antérieure

Les réacteurs nucléaires à eau sous pression existants comprennent habituellement une cuve contenant le coeur du réacteur, des circuits primaires reliant la cuve à des générateurs de vapeur placés à l'extérieur de celle-ci et des pompes primaires aptes à faire circuler de l'eau sous pression dans chacun des circuits primaires, pour transférer jusqu'aux générateurs de vapeur la chaleur produite par la réaction nucléaire dans le coeur du réacteur. Un pressuriseur également placé à l'extérieur de la cuve assure la mise sous pression de l'eau contenue dans la cuve et dans les circuits primaires.

Dans ces réacteurs nucléaires existants, des circuits secondaires relient chacun des générateurs de vapeur à une turbine qui entraîne un alternateur, pour transformer en courant électrique la chaleur en provenance du circuit primaire. Plus précisément, dans les générateurs de vapeur, cette chaleur transforme en vapeur de l'eau mise en circulation dans les circuits secondaires par des pompes secondaires. La vapeur qui actionne la turbine est ramenée ensuite à l'état liquide dans un condenseur.

On connaît également des réacteurs nucléaires à eau sous pression de type "intégré" et des réacteurs nucléaires à eau sous pression de type "compact".

Les réacteurs de type intégré se distinguent des précédents par le fait que les générateurs de vapeur sont placés à l'intérieur de la cuve du réacteur, dans une région annulaire délimitée entre la paroi périphérique de la cuve et une cloison intérieure à celle-ci. Les pompes primaires restent toutefois placées à l'extérieur de la cuve, à laquelle elles sont reliées par des canalisations appropriées. Les mécanismes de commande des barres de contrôle sont également situés à l'extérieur de la cuve, comme dans les réacteurs traditionnels. Une enceinte étanche assure le confinement global du circuit primaire.

Dans les réacteurs de type compact, un générateur de vapeur unique forme le couvercle de la cuve.

Les réacteurs nucléaires à eau sous pression de conception classique, de type intégré et de type compact sont utilisés avec succès depuis de nombreuses années, ou font l'objet de nombreux projets.

Ils présentent cependant certains inconvénients qui découlent directement de leur conception.

Un premier inconvénient concerne leur conception. Les pompes primaires et le pressuriseur sont situés hors de la cuve. Les barres de contrôle sont mues par des moteurs situés hors de la cuve et le mécanisme contient un renvoi d'angle. La complexité de ces dispositifs ne permet pas de concevoir ainsi des coeurs de forte puissance (supérieur à 500 ou 1000 MW thermiques) en raison de l'encombrement lié à la nécessité de nombreuses barres de contrôle.

Un deuxième inconvénient est leur coût d'investissement, dû notamment à l'architecture des bâtiments imposée par la conception rappelée précédemment.

Un autre inconvénient concerne l'existence d'un certain nombre de situations accidentelles également inhérentes à la conception des réacteurs existants. Ces situations imposent la présence de nombreux systèmes de sauvegarde et d'évacuation de la puissance résiduelle qui augmentent de manière sensible le coût de ces réacteurs.

De surcroît, les réacteurs nucléaires à eau pressurisée existants permettent seulement l'utilisation d'assemblages de combustible nucléaire de conception traditionnelle. Or, certains assemblages de conception plus récente présentent des avantages substantiels qu'il serait souhaitable de pouvoir utiliser.

### Exposé de l'invention

L'invention a pour but de résoudre au moins en partie les problèmes posés par les réacteurs nucléaires à eau sous pression existants.

Plus précisément, l'invention a notamment pour but de proposer un réacteur nucléaire compact à eau sous pression dont la conception originale lui permet d'être plus économique à la construction et intrinsèquement plus sûr que les réacteurs existants, tout en autorisant éventuellement le recours à des assemblages de combustible nucléaire de différents types.

Conformément à l'invention, cet objectif est atteint au moins partiellement grâce à un réacteur nucléaire compact à eau sous pression, comprenant une cuve fermée par un couvercle, un coeur de réacteur logé dans la cuve, un générateur de vapeur formant le couvercle de la cuve, des moyens de pompage primaires aptes à faire circuler de l'eau entre le coeur du réacteur et le générateur de vapeur, et un pressuriseur apte à assurer la mise sous pression de l'eau, caractérisé en ce que les moyens de pompage et le pressuriseur sont logés dans la cuve du réacteur, de façon à former un circuit primaire totalement intégré dans ladite cuve..

La conception totalement intégrée du réacteur conforme à l'invention permet de réduire les coûts d'investissement, notamment en simplifiant l'architecture des bâtiments. Cette conception intégrée permet aussi d'éliminer un certain nombre de situations accidentelles difficiles à gérer du point de vue de la sûreté et imposant des systèmes de gestion coûteux.

Selon un mode de réalisation préféré de l'invention, des mécanismes de commande des barres de contrôle sont également intégrés dans la cuve du réacteur.

Dans le mode de réalisation préféré de l'invention, une cloison sensiblement annulaire fait saillie vers le bas à partir du couvercle et délimite, à l'intérieur de la cuve, une région périphérique et une région centrale. Le coeur du réacteur et le pressuriseur sont alors logés respectivement dans le bas et dans le haut de la région centrale et les moyens de pompage sont logés dans le haut de la région périphérique.

De préférence, le pressuriseur comprend un réservoir de forme annulaire, à section en forme de U renversé, ouvert vers le bas et dont le sommet communique avec un ballon formant source de vapeur, des moyens étant prévus pour alimenter ledit ballon en eau prélevée dans la région périphérique, en dessous des moyens de pompage.

Avantageusement, un système de venturi, alimenté par de l'eau contenue dans la région centrale, est placé dans la région périphérique pour créer dans celle-ci une circulation naturelle de l'eau, de haut en bas, en cas de défaillance des moyens de pompage.

En complément, un échangeur de refroidissement de secours est avantageusement placé dans la région périphérique, en dessous du système de venturi.

Dans un mode de réalisation préféré de l'invention, la réactivité du coeur du réacteur est pilotée en l'absence de poison neutronique soluble dans l'eau de refroidissement.

### Brève description des dessins

On décrira à présent, à titre d'exemple illustratif et non limitatif, un mode de réalisation préféré de l'invention, en se référant au dessin annexé, dans lesquels la figure unique est une vue de côté, en coupe verticale, qui représente schématiquement un réacteur nucléaire compact à eau sous pression conforme à l'invention.

### Description détaillée d'un mode de réalisation préféré de l'intention

Comme on l'a représenté schématiquement sur la figure unique, le réacteur nucléaire compact à eau sous pression conforme à l'invention comprend une cuve 10, d'axe vertical.

L'extrémité supérieure de la cuve 10 comporte une ouverture normalement fermée par un générateur de vapeur 12 formant ainsi le couvercle de la cuve.

Le volume clos contenu à l'intérieur de la cuve 10, en dessous du couvercle matérialisé par le générateur de vapeur 12, est délimité intérieurement par une cloison sensiblement annulaire 15, qui fait saillie vers le bas à partir dudit couvercle. La cloison 15, centrée sur l'axe vertical de la cuve 10, sépare ainsi ce volume clos en une région centrale 16 et une région périphérique 18, qui communiquent l'une avec l'autre dans le bas de la cuve 10.

Le coeur 14 du réacteur est logé dans le bas de la région centrale 16. I1. est formé d'assemblages de combustible nucléaire agencés en faisceau selon une direction verticale. Ces assemblages peuvent être de conception classique ou d'un type différent. Dans ce dernier cas, il peut notamment s'agir d'assemblages de conception plus récente tels que des assemblages avancés, par exemple consommateurs d'actinides.

A titre d'exemple non limitatif, le coeur 14 du réacteur peut notamment être formé de 157 assemblages de 17x17 crayons, comme dans les réacteurs à eau sous pression de 900 MWe existants. Toutefois, la puissance spécifique est diminuée de 25% par rapport à ces réacteurs.

Cette baisse de puissance permet de supprimer le poison neutronique soluble habituellement destiné à contrôler la réactivité du coeur. Elle permet aussi d'envisager l'emploi de combustibles de différents types, en utilisant les marges dégagées sur le flux critique par la baisse du point de fonctionnement et la baisse de densité de puissance. La baisse de la densité de puissance permet également d'allonger les durées de cycle et, par conséquent, d'accroître la disponibilité.

Le générateur de vapeur 12 comprend une plaque de base horizontale 20 formant le couvercle de cuve proprement dit et une enveloppe extérieure 22 raccordée de façon étanche sur le bord périphérique de la plaque de base 20 et délimitant avec celle-ci un espace secondaire clos 24. Le générateur de vapeur 12 comprend également un faisceau de tubes 26 en forme de U renversé, placé dans l'espace secondaire clos 24. Plus précisément, les deux extrémités de chacun des tubes 26 sont fixées sur la plaque de base 20 de façon telle que l'une de ces extrémités débouche dans la région centrale 16 et que l'autre extrémité débouche dans la région périphérique 18.

Le volume clos délimité à l'intérieur de la cuve 10 ainsi qu'à l'intérieur des tubes 26 forme le circuit primaire du réacteur. Ce circuit primaire, totalement intégré, est rempli d'eau sous pression.

La circulation de l'eau dans le circuit primaire du réacteur est assurée par des moyens de pompage primaires, matérialisés par un certain nombre de pompes primaires 28 logées directement dans la partie haute de la région périphérique 18.

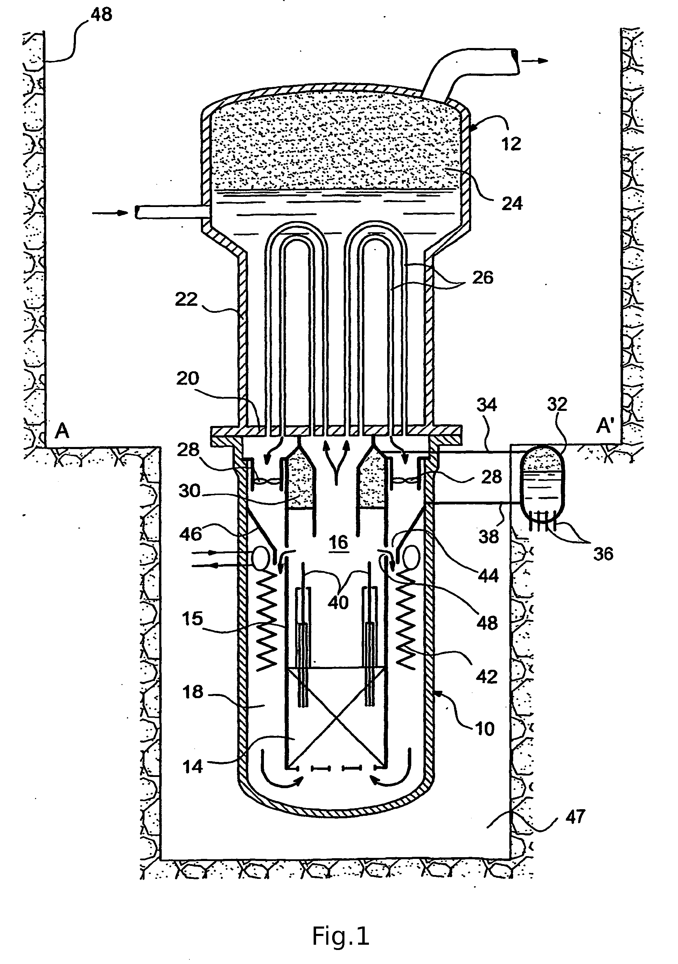

Lorsqu'elles sont en fonctionnement, les pompes primaires 28 font circuler l'eau dans le sens des flèches sur la figure 1. En d'autres termes, les pompes 28 font circuler l'eau vers le bas de la cuve 10 dans la région périphérique 18, puis vers le haut au travers du coeur 14 dans la région centrale 16 et enfin de bas en haut, puis de haut en bas dans les tubes 26 du générateur de vapeur 12.

Dans la pratique, les pompes primaires 28 peuvent prendre différentes formes. Parmi les pompes utilisables, on citera notamment les pompes radiales, les pompes-injecteurs et les turbopompes axiales.

Les pompes radiales sont des pompes à rotor noyé qui sont disposées en haut de la cuve et orientées selon une direction radiale par rapport à l'axe vertical de celle-ci. Ce type de pompe est décrit dans la référence [1].

Dans le cas des pompes-injecteurs, la partie supérieure de la région périphérique 18 comporte une série d'injecteurs ou de pompes à jet. L'injecteur est alimenté avec un faible débit mais à forte pression pour faire circuler la majeure partie du caloporteur sans qu'il sorte de la cuve. Le débit d'alimentation haute pression de l'injecteur provient d'une pompe située hors de la cuve.

Enfin, des turbopompes verticales peuvent aussi être placées en haut de la région périphérique 18. La turbine est alors alimentée par de l'eau primaire à haute pression provenant d'une pompe située hors de la cuve. La turbopompe axiale remplit la même fonction de "transformateur hydraulique" que l'injecteur dans le cas précédent, mais avec une pièce tournante.

Dans le cas de la turbopompe verticale, la turbine peut être remplacée par un moteur électrique dont les bobinages sont recouverts d'une peau d'étanchéité pour les isoler du fluide caloporteur.

Conformément à l'invention, le pressuriseur 30 est également intégré dans la cuve 10 du réacteur. Plus précisément, le pressuriseur 30 se présente sous la forme d'un réservoir de forme annulaire logé dans le haut de la région centrale 16 de la cuve 10, immédiatement en dessous de la plaque de base 20. Ce réservoir est délimité par une paroi qui présente en section la forme d'un U renversé. Le réservoir formant le pressuriseur 30 est ouvert vers le bas de façon à déboucher directement dans la région centrale 16 de la cuve 10.

La partie haute du réservoir formant le pressuriseur 30 est remplie de vapeur. Le sommet dudit réservoir est alimenté en mélange diphasique eau-vapeur par une canalisation 34 reliée à un ballon 32 de faible volume placé à l'extérieur de la cuve 10 et faisant office de source de vapeur. A cet effet, le ballon 32 est équipé de cannes chauffantes 36. L'alimentation en eau du ballon 32 est assurée par une autre canalisation 38, qui relie ledit ballon à la région périphérique 18 de la cuve 10, juste en aval des pompes primaires 28.

On a aussi représenté schématiquement sur la figure 1 les barres de contrôle 40 servant à contrôler la réactivité dans le coeur 14 du réacteur.

Avantageusement, les barres de contrôle 40 et leurs mécanismes de commande sont également intégrés dans la cuve du réacteur. Cet agencement est dicté par l'impossibilité d'utiliser des mécanismes standards (mécanismes électromagnétiques placés à l'extérieur de la cuve) en raison de la présence du générateur de vapeur au-dessus de la cuve 10.

Le caractère particulièrement compact des mécanismes de commande intégrés autorise l'utilisation d'une barre de contrôle 40 pour un ou deux assemblages de combustible nucléaire et conduit à supprimer les excursions locales de puissance dues à une éjection d'une barre de contrôle, comme cela peut être redouté dans le réacteur à eau sous pression de conception standard. Cela permet aux barres de contrôle 40 d'assurer à elles seules le contrôle de la réactivité dans le coeur, ce qui autorise une absence de poison neutronique soluble dans l'eau de refroidissement du coeur 14 du réacteur.

L'absence de poison neutronique soluble dan l'eau de refroidissement du coeur 14 du réacteur est également rendu possible par le fait que la faible densité de puissance permet de s'accommoder de pics locaux de puissance légèrement plus forts que dans des réacteurs à eau sous pression de conception standard. La faible puissance volumique et la baisse du point de fonctionnement par rapport à ces réacteurs standard diminuent les besoins en contrôle de réactivité et contribuent également à autoriser la suppression du bore soluble.

Le choix d'un coeur sans poison neutronique soluble est également facilité par la conception intégrée, qui supprime la possibilité de blocage de plusieurs mécanismes de commande des barres de contrôle due à une grosse brèche primaire.

Il est à noter que la suppression du poison neutronique soluble dans le coeur du réacteur permet une importante simplification des systèmes annexes et une réduction du rejet d'effluents liés à la gestion du poison soluble, ce qui conduit à une réduction significative du coût d'investissement et des frais de maintenance et d'exploitation. Une injection de poison neutronique comme de l'eau borée peut toutefois être envisagée en situation accidentelle.

Les barres de contrôle à mécanismes de commande intégrés dans la cuve 10 du réacteur peuvent être constituées soit par un système de barres commandées par un dispositif hydraulique, soit par un système de barres fluides, soit encore par ces deux systèmes combinés de façon à assurer une redondance.

Des barres de contrôle commandées par un dispositif hydraulique sont décrites notamment dans la référence [2]. Un tel mécanisme se compose d'un piston creux et d'un cylindre mobile. Le piston est fixé sur la plaque support du coeur et le cylindre est cannelé en partie inférieure. Les géométries des cannelures du piston et du cylindre sont identiques. Le maintien en position du cylindre est obtenu en admettant un débit donné de fluide primaire à l'intérieur du piston. On provoque ainsi une montée ou une descente du cylindre, d'une hauteur égale au pas des cannelures, en accroissant ou en réduisant temporairement ce débit de fluide primaire.

Un système de barres fluides est décrit dans le document FR-A-2 765 722. Dans ce système, un sel liquide contenant des absorbants neutroniques est déplacé dans le coeur au travers d'un faisceau de tubes guides. Le mouvement de ces absorbants est réalisé au moyen d'un gaz faisant office de piston et agissant sur le sel. La réserve de sel absorbant est disposée au-dessus des assemblages. Un arrêt automatique de la puissance du coeur peut être effectué par une introduction rapide des absorbants. Les répartitions axiale et radiale du sel absorbant peuvent être contrôlées afin d'aplatir la forme du flux dans le coeur.

Le point de fonctionnement du réacteur compact selon l'invention est choisi avantageusement à une pression et une température relativement basses. Ainsi, une pression d'environ 80 à 90 bar dans le circuit primaire est retenue.

Ces caractéristiques de fonctionnement permettent d'envisager une réduction significative des épaisseurs des composants résistant à la pression, tels que la cuve, le générateur de vapeur et l'épaisseur de la plaque de base 20 du générateur de vapeur, une augmentation du taux de combustion, une diminution de la corrosion des gaines, et une simplification des systèmes de sauvegarde.

Pour ce point de fonctionnement, la pression dans le circuit secondaire est environ de 30 bar, ce qui conduit à un rendement net de 30%. La puissance thermique du coeur est de 2000 MW.

Comme on l'a également illustré sur la figure unique, le réacteur compact selon l'invention est de préférence équipé de systèmes de sauvegarde ou de sécurité.

Ces systèmes de sauvegarde comprennent des moyens d'évacuation de la puissance résiduelle, des moyens d'injection de sécurité et des moyens de contrôle de la pression primaire.

Les moyens d'évacuation de la puissance résiduelle sont placés d'une part sur le circuit primaire et d'autre part sur le circuit secondaire du réacteur. Cet agencement permet d'assurer une diversité des moyens en fonction du transitoire anormal, compte tenu du fait que le réacteur comprend un seul générateur de vapeur.

Le système d'évacuation de puissance implanté sur le circuit primaire comprend des échangeurs de chaleur 42 placés dans la région périphérique 18 de la cuve. Ces échangeurs sont reliés à un circuit de refroidissement de secours (non représenté) à l'extérieur de la cuve 10 du réacteur.

Le système implanté sur le circuit primaire comprend également un système de venturi 44 placé dans la région périphérique 18, au-dessus des échangeurs 42. Le système de venturi 44 est formé entre la cloison 15 et une virole 46 raccordée sur la paroi périphérique de la cuve 10. La forme de la virole 46 est telle que la section d'écoulement diminue progressivement en allant vers le bas à l'intérieur de la région périphérique 18, jusqu'à un étranglement formé à la base du système de venturi 44. Au niveau de cet étranglement, le système de venturi est alimenté en eau en provenance de la région centrale 16 par des ouvertures 48 prévues à cet effet dans la cloison 15. Le venturi est dimensionné afin qu'en fonctionnement normal, la pression en 44 soit sensiblement égale à la pression en 48. De cette manière, le débit de court-circuit entre la région 16 et la région 18 peut être réduit au minimum. En situation de pompes à l'arrêt, les ouvertures 48 permettent une convection naturelle entre le coeur 14 et les échangeurs 42 pour évacuer la puissance dégagée dans le coeur.

Le système d'évacuation de la puissance résiduelle implanté sur le circuit secondaire, qui ne fait pas partie de l'invention, peut notamment comprendre un système de condensation au secondaire associé à une vanne thermique, ou un système avec injecteur à vapeur.

Dans le premier cas, le système de condensation au secondaire peut notamment être du type décrit dans la référence [3] et la vanne thermique peut être du type décrit dans le document FR-A-2 725 508.

Par ailleurs, un système à injecteurs à vapeur peut être réalisé de la manière décrite dans la référence [4].

Des moyens d'injection de sécurité sont également prévus, afin d'assurer la présence d'un volume d'eau suffisant dans le circuit primaire, en cas d'accident. Toutefois, du fait que les grosses brèches sont éliminées par la conception totalement intégrée du réacteur, un système à faible débit est suffisant. Dans le cas où la pression dans le circuit primaire est basse, la pression de refoulement du système d'injection de sécurité peut être, par exemple, d'environ 25 bar.

En ce qui concerne le contrôle de la pression primaire dans l'hypothèse d'une défaillance de tous les systèmes de sauvegarde à l'exception du système passif installé dans le circuit primaire, des études ont montré qu'il est possible de gérer les transitoires accidentels en évitant une fusion du coeur en pression, sans système de dépressurisation volontaire du circuit primaire (référence [5]).

Le confinement du réacteur compact qui vient d'être décrit peut notamment comprendre une enceinte à suppression de pression 47 contenant le circuit primaire. Cette enceinte peut alors être limitée au volume du compartiment situé sous le plan horizontal de jonction de la cuve 10 et du générateur de vapeur 12. Le générateur de vapeur est alors placé dans une piscine 48 située au-dessus de ce plan, utilisée pour les opérations de rechargement du coeur et de maintenance.

Dans cet agencement, il est possible de rendre l'enceinte de confinement inerte sur un faible volume. Cela a pour conséquences de limiter le coût d'investissement et de permettre une gestion relativement aisée du risque d'explosion lié à la présence d'hydrogène.

Dans l'hypothèse d'un accident grave, le refroidissement du corium peut être assuré par le renoyage du puits de cuve, sans qu'il soit nécessaire de prévoir un récupérateur externe. Cela est rendu possible par le fait que la puissance et la densité de puissance du coeur sont réduites par rapport à celles d'un réacteur à eau sous pression de 900 MWe existant.

Bien entendu, l'invention n'est pas limitée au mode de réalisation qui vient d'être décrit à titre d'exemple, en particulier, la forme du pressuriseur 30 peut être différente de celle qui est illustrée sur la figure 1, sans sortir du cadre de l'invention. **Références**
[1] "Design of Safe Intégral Reactor", R.A. Matzie, Nuclear Engineering and design, vol. 136 (1992) p. 72-83.
[2] de Bathéja P. et al."Design and testing of the reactor internal hydraulic control rod drive for the nuclear heating plant", Nuclear technology, 1987, vol. 79, pages 186 à 195.
[3] "A 900 MWe PWR residual heat removal with a passive secondary condensing system", ICONE 5 proceedings, May 26-30, 1997, Nice (France).
[4] "Design and testing of passive heat removal system with Ejector-Condenser.-Progress in Design, research and development and testing of safety systems for advanced water cooled reactors" de K.I. Soplenkov & al. dans Proceedings of a Technical Committee meeting held in Piacenza, Italie, 16 au 19 mai 1995.
[5] G. M. Gautier, Passive heat removal system with the "Base operation passive heat removal" strategy, ICONE 7 proceedings - April 19-23, 1999, Tokyo (Japon).

## Revendications

1. Réacteur nucléaire compact à eau sous pression, comprenant une cuve (10) fermée par un couvercle, un coeur (4) de réacteur logé dans la cuve (10), un générateur de vapeur (12) formant le couvercle de la cuve (10), des moyens de pompage primaires (28) logés dans la cuve 10 et aptes à faire circuler de l'eau entre le coeur (14) du réacteur et le générateur de vapeur (12), et un pressuriseur (30) apte à assurer la mise sous pression de l'eau, **caractérisé en ce que** le pressuriseur (30) est logé dans la cuve (10) du réacteur, de façon à former un circuit primaire totalement intégré dans la dite cuve le pressuriseur (30) comprenant un réservoir de forme annulaire, à section en forme de U. renversé, ouvert vers le bas et dont le sommet communique avec un ballon (32) formant source de vapeur.

2. Réacteur nucléaire compact à eau sous pression selon la revendication 1, dans lequel des mécanismes de commande de barres de contrôle (40) sont également intégrés dans la cuve (10) du réacteur.

3. Réacteur nucléaire compact à eau sous pression selon l'une quelconque des revendications précédentes, dans lequel une cloison (15) sensiblement annulaire fait saillie vers le bas à partir du couvercle et délimite, à l'intérieur de la cuve (10), une région périphérique (18) et une région centrale (16), le coeur (14) du réacteur et le pressuriseur (30) étant logés respectivement dans le bas et dans le haut de la région centrale (16) et les moyens de pompage (28) étant logés dans le haut de la région périphérique(18).

4. Réacteur nucléaire compact à eau sous pression selon la revendication 3, dans lequel des moyens (38) sont prévus pour alimenter ledit ballon (32) en eau prélevée dans la région périphérique(18), en aval des moyens de pompage(28).

5. Réacteur nucléaire compact à eau sous pression selon l'une quelconque des revendications 3 et 4, dans lequel un système de venturi (44), alimenté par de l'eau contenue dans la région centrale (16), est placé dans la région périphérique (18) pour créer dans celle-ci une circulation naturelle de l'eau, de haut en bas, en cas de défaillance des moyens de pompage (28).

6. Réacteur nucléaire compact à eau sous pression selon la revendication. 5, dans lequel un échangeur de refroidissement de secours (42) est également placé dans la région périphérique (18), en dessous du système de venturi (44).

7. Réacteur nucléaire compact à eau sous pression selon l'une quelconque des revendications précédentes, dans lequel la réactivité du coeur (14) est pilotée en l'absence de poison neutronique soluble dans l'eau de refroidissement.

## Claims

1. Compact pressurised water nuclear reactor, comprising a vessel (10) closed by a cover, a reactor core (14) housed in the vessel (10), a steam generator (12) forming the cover of the vessel (10), primary pumping means (28) housed in the vessel (10) and capable of making water circulate between the reactor core (14) and the steam generator (12), and a pressuriser (30) for pressurising water, **characterised in that** the pressuriseur (30) is housed in the reactor vessel (10) so as to form a primary circuit fully integrated into the said vessel, the pressuriser (30) comprising an angular shaped reservoir with an inverse V-shaped cross-section, open downwards and the top of which communicates with a tank (32) forming steam source.

2. Compact pressurised water nuclear reactor according to claim 1, in which control mechanisms for the control rods (40) are also integrated into the reactor vessel (10).

3. Compact pressurised water nuclear reactor according to any one of the above claims, in which an approximately annular partition (15) projects downwards from the cover and delimits a peripheral region (18) and a central region (16) inside the vessel (10), the reactor core (14) and the pressuriser (30) being housed respectively in the bottom and in the top of the central region (16), and the pumping means (28) being housed in the top of the peripheral region (18).

4. Compact pressurised water nuclear reactor according to claim 3, in which means (38) are provided for supplying water to the said tank (32) taken from the peripheral region (18), downstream the pumping means (28).

5. Compact pressurised water nuclear reactor according to either claim 3 or 4, in which a venturi system (44), supplied with water contained in the central region (16), is located in the peripheral region (18) to create a natural water circulation in this region, from top to bottom, if there is a failure of the pumping means (28).

6. Compact pressurised water nuclear reactor according to claim 5, in which an emergency cooling exchanger (42) is also placed in the peripheral region (18) below the venturi system (44).

7. Compact pressurised water nuclear reactor according to any one of the above claims, in which the reactivity of the core (14) is controlled without any soluble neutron poison in the cooling water.

## Patentansprüche

1. Kompakter Druckwasser-Kernreaktor, umfassend: einen durch einen Deckel verschlossen Reaktorbehälter (10), einen in dem Reaktorbehälter (10) enthalten Reaktorkern (14), einen den Deckel des Reaktorbehälters (10) bildenden Dampfgenerator (12), primäre Pumpeinrichtungen (28) mit Sitz in dem Reaktorbehälter (10) und fähig, Wasser zwischen dem Reaktorkern (14) und dem Dampfgenerator (12) zirkulieren zu lassen, und einen Druckerzeuger (30), fähig das Wasser unter Druck zu setzen,
**dadurch gekennzeichnet, dass** der Druckerzeuger (30) sich in dem Reaktorbehälter (10) befindet, um einen ganz in den genannten Reaktorbehälter integrierten Primärkreis zu bilden, wobei der Druckerzeuger (30) einen ringförmigen Speicher mit einem Querschnitt mit der Form eines umgekehrten, nach unten offenen U umfasst, dessen Spitze mit einem die Dampfquelle bildenden Gefäß (32) verbunden ist.

2. Kompakter Druckwasser-Kernreaktor nach Anspruch 1, bei dem auch Kontrollmechanismen von Steuerstäben (40) in den Reaktorbehälter (10) integriert sind.

3. Kompakter Druckwasser-Kernreaktor nach einem der vorangehenden Anspruche, bei dem eine im Wesentlichen ringförmige Trennwand (15) sich vom Deckel ausgehend nach unten erstreckt und im Innern des Reaktorbehälters (10) einen peripheren Bereich (18) und einen zentralen Bereich (16) abgrenzt, wobei der Reaktorkern (14) und der Druckerzeuger (30) sich im unteren Teil beziehungsweise im oberen Teil des zentralen Bereichs (16) befinden und die Pumpeinrichtungen (28) sich im oberen Teil des peripheren Bereichs (18) befinden.

4. Kompakter Druckwasser-Kernreaktor nach Anspruch 3, bei dem Einrichtungen (38) vorgesehen sind, um das genannte Gefäß (32) mit Wasser zu versorgen, entnommen aus dem peripheren Bereich (18) unterhalb der Pumpeinrichtungen (28).

5. Kompakter Druckwasser-Kernreaktor nach einem der Ansprüche 3 und 4, bei dem ein mit Wasser aus dem zentralen Bereich (16) gespeistes Venturisystem (44) in dem peripheren Teil (18) vorgesehen ist, um in diesem eine natürliche Wasserzirkulation von oben nach unten zu erzeugen, falls die Pumpeinrichtungen (28) ausfallen,

6. Kompakter Druckwasser-Kernreaktor nach Anspruch 5, bei dem in dem peripheren Bereich (18) auch ein Sicherheits-Kühlungstauscher (42) vorgesehen ist, unterhalb des Venturisystems (44).

7. Kompakter Druckwasser-Kernreaktor nach einem der vorangehenden Ansprüche, bei dem die Reaktivität des Reaktorbehälters (14) bohne in dem Kühlwasser lösliche Neutronenflüssigkeit bzw. Neutronenabsorptionsflüssigkeit gesteuert wird.
